Europäisches Patentamt

European Patent Office

Office européen des brevets

(19)

(11) **EP 1 134 884 A1**

(12) # DEMANDE DE BREVET EUROPEEN

(43) Date de publication:
**19.09.2001 Bulletin 2001/38**

(51) Int Cl.7: **H02P 7/285**

(21) Numéro de dépôt: **01400667.0**

(22) Date de dépôt: **14.03.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **15.03.2000 FR 0003300**

(71) Demandeur: **Valeo Electronique
94042 Créteil (FR)**

(72) Inventeurs:
• **Bonduel, Pascal
45460 Bouzy la Forêt (FR)**
• **Levine, Jean
75004 Paris (FR)**

(74) Mandataire: **Croonenbroek, Thomas et al
Valeo Securité Habitacle,
42, rue Le Corbusier,
Europarc
94042 Créteil Cedex (FR)**

(54) **Procédés et dispositifs pour le suivi de la rotation de moteurs électriques à courant continu**

(57) Procédé pour le suivi de la rotation d'un moteur électrique à courant continu, caractérisé en ce qu'on mesure de façon échantillonnée dans le temps la tension et l'intensité du courant d'alimentation dudit moteur et en ce que, pour chaque instant $t_n$ d'échantillonnage, on calcule une estimation $\theta_n$ de la position angulaire en fonction d'une position déterminée ou connue pour un instant d'échantillonnage précédent et d'une estimation d'une valeur de vitesse angulaire entre ces deux instants, qui est fonction de la tension et de l'intensité de courant mesurée pour l'instant d'échantillonnage $t_n$ et/ou pour un ou plusieurs instants d'échantillonnage précédents.

FIG_3

EP 1 134 884 A1

**Description**

La présente invention est relative à des procédés et des dispositifs pour le suivi de la rotation de moteurs électriques à courant continu.

Plus particulièrement, l'invention trouve avantageusement application pour les commandes électriques dans des véhicules automobiles et notamment pour le suivi de la position et de la vitesse d'un ouvrant (lève-vitre, toit ouvrant, porte coulissante, etc. ) commandé électriquement à l'aide d'un moteur électrique à courant continu ou encore pour la commande de moteurs électriques de ventilation, climatisation ou chauffage d'habitacles.

A ce jour, la gestion de la position d'un mécanisme avec moteur à courant continu est généralement effectuée par un des moyens suivants :

- utilisation de capteurs incrémentaux angulaires ou linéaires (effet Hall par exemple) et comptage des impulsions du capteur.
- détection des positions fin de course (ou autre) par des capteurs (switch électromécaniques, inductifs...)
- détection des butées mécaniques par mesure du courant consommé.

La première solution présente l'inconvénient de nécessiter l'utilisation de capteurs coûteux.

En outre, la précision de la position ainsi déterminée est entièrement dépendante de la structure du capteur et peut fortement varier d'un capteur à un autre.

Par ailleurs, si l'on connaît avec précision la position que l'on cherche à déterminer à l'instant où une impulsion est déclenchée, cette position n'est connue qu'avec une faible précision entre chaque impulsion.

La deuxième solution présente l'inconvénient de nécessiter, elle aussi, l'utilisation de capteurs coûteux et de ne pas permettre une détermination précise de position entre les jalons du capteurs.

La troisième solution nécessite l'emploi de butées mécaniques et une détection de courant de blocage. La nécessité du blocage pour la détection induit un dimensionnement coûteux des organes mécaniques qui doivent supporter les contraintes de blocage. En outre, là aussi, la position n'est pas maîtrisée entre les positions de butée.

Un but de l'invention est de proposer une solution qui soit fiable et économique et qui permette de suivre avec précision la position d'un élément mobile, et ce sur l'ensemble de sa course.

Elle propose à cet effet un procédé pour le suivi de la rotation d'un moteur électrique à courant continu, caractérisé en ce qu'on mesure de façon échantillonnée dans le temps la tension et l'intensité du courant d'alimentation dudit moteur et en ce que, pour chaque instant $t_n$ d'échantillonnage, on calcule une estimation $\theta_n$ de la position angulaire en fonction d'une position déterminée ou connue pour un instant d'échantillonnage précédent et d'une estimation d'une valeur de vitesse angulaire entre ces deux instants, qui est fonction de la tension et de l'intensité de courant mesurée pour l'instant d'échantillonnage $t_n$ et/ou pour un ou plusieurs instants d'échantillonnage précédents.

Avantageusement, on calcule une estimation d'une valeur de vitesse angulaire $\Omega_n$ à un instant $t_n$ à partir de l'équation :

$$\Omega_n = \frac{(U_n - RI_n)}{Ke}$$

où $U_n$ et $I_n$ sont les valeurs mesurées pour la tension et l'intensité d'alimentation à l'instant d'échantillonnage, où R correspond à la résistance équivalente du moteur, où $K_e$ est le paramètre de proportionnalité entre la vitesse de rotation de l'arbre du moteur et la force électromotrice générée par la rotation.

Notamment, pour un instant $t_n$, on détermine une estimation $\theta_n$ de la position angulaire par :

$$\theta_n - \theta_{n-1} = \left(\frac{\Omega_n + \Omega_{n-1}}{2}\right)(t_n - t_{n-1})$$

où n-1 est l'indice de l'instant d'échantillonnage $t_{n-1}$ juste avant l'instant $t_n$.

Selon un mode de mise en oeuvre possible, lors d'un démarrage, on détermine une estimation la valeur de la résistance R en calculant :

$$R = ax\frac{U}{I_{pic}}.$$

où $I_{pic}$ est l'intensité de courant maximale mesurée lors d'un démarrage, U la tension d'alimentation mesurée correspondant à cette intensité de courant, a un coefficient donné.

Selon un autre mode de mise en oeuvre, on détermine une estimation de la valeur de la résistance R en calculant :

$$R = \frac{1}{\int_{1}^{t2} Idt} \left( \int_{1}^{t2} Udt - K\sigma \right)$$

où $\sigma$ est l'angle qui sépare les positions correspondant à deux jalons de positions déterminées, t1 et t2 correspondant aux deux instants où ces deux jalons sont franchis.

Notamment alors, pour déterminer cette valeur estimée, on calcule :

$$R = \frac{1}{\sum_{tn=t1}^{t2} I_n . \Delta t} \left( \sum_{t=t1}^{t2} (U_n . \Delta t - K\sigma) \right)$$

où

In est la valeur échantillonnée du courant pour t=tn
Un est la valeur échantillonnée de la tension pour t=tn
et où $\Delta$t est la période d'échantillonnage.

De préférence, on détermine une estimation de la température du moteur électrique en fonction de l'estimation de la valeur de la résistance R et, selon la valeur de la température ainsi estimée, on coupe l'alimentation du moteur électrique.

Un dispositif conforme à l'invention comporte des moyens de mesure et de calcul pour mettre en oeuvre le procédé précité.

De façon préférentielle, les moyens de calcul comportent un micro-contrôleur qui pilote le moteur électrique.

Avantageusement, ce dispositif comporte des moyens pour, en fonction de la vitesse et de la position angulaire calculées à chaque instant d'échantillonnage, commander le moteur électrique de façon à éviter des pincements trop importants.

En variante ou en complément, il comporte des moyens pour, en fonction de la vitesse et de la position angulaire calculées à chaque instant d'échantillonnage, asservir en vitesse le déplacement de l'ouvrant.

En variante ou en complément également, il comporte des moyens pour, en fonction de la vitesse et de la position angulaire calculées à chaque instant d'échantillonnage, commander le moteur électrique de façon à obtenir un positionnement précis de l'ouvrant.

Un autre objet de l'invention est de proposer un système de commande d'ouvrants de véhicule automobile comportant un moteur électrique à courant continu, caractérisé en ce qu'il comporte un dispositif du type précité.

D'autres caractéristiques et avantages de l'invention ressortiront encore de la description qui suit, laquelle est purement illustrative et non limitative et qui doit être lue en regard des figures annexées sur lesquelles :

- la figure 1 est un schéma illustrant l'alimentation d'un moteur au moyen d'un dispositif conforme à un mode de réalisation possible de l'invention ;
- la figure 2 est constituée de deux schémas électriques et illustre la modélisation électrique que l'on peut faire d'un moteur à courant continu ;
- la figure 3 est un schéma d'un montage comportant un dispositif conforme à un mode de réalisation de l'invention ;
- la figure 4 est un graphe sur lequel on a porté l'évolution en fonction du temps de l'intensité du courant d'alimentation d'un moteur à courant continu du type de celui de la figure 2.

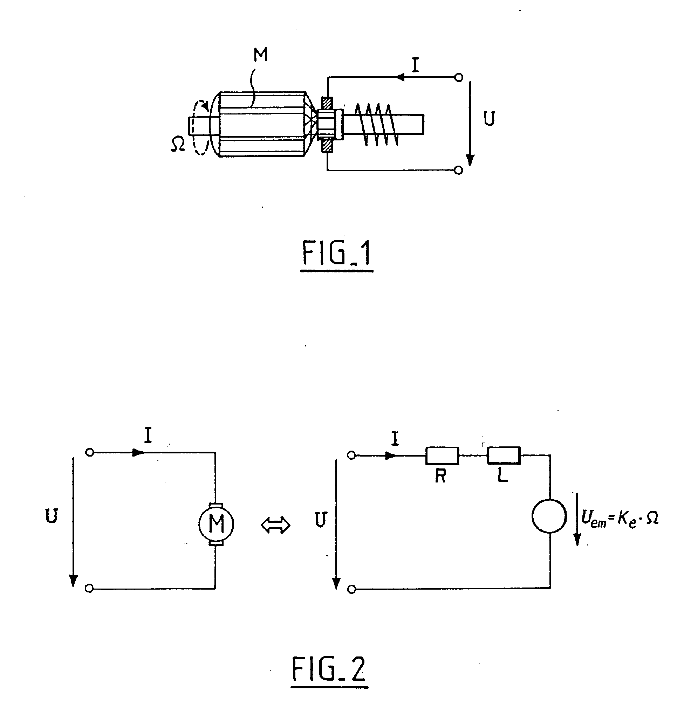

Sur la figure 1, on a représenté un moteur électrique M alimenté par un courant d'alimentation d'intensité I au moyen d'une tension d'alimentation U et dont l'arbre tourne à une vitesse de rotation $\Omega$.

On sait, ainsi que l'illustre la figure 2, qu'un tel moteur électrique peut se modéliser électriquement par :

$$L\frac{dI}{dt} = U - R.I - K_e\Omega$$

où L et R sont l'inductance et la résistance du moteur et où $K_e$ est un paramètre propre au moteur (paramètre de proportionnalité entre la vitesse de rotation de l'arbre du moteur et la force électromotrice générée par la rotation).

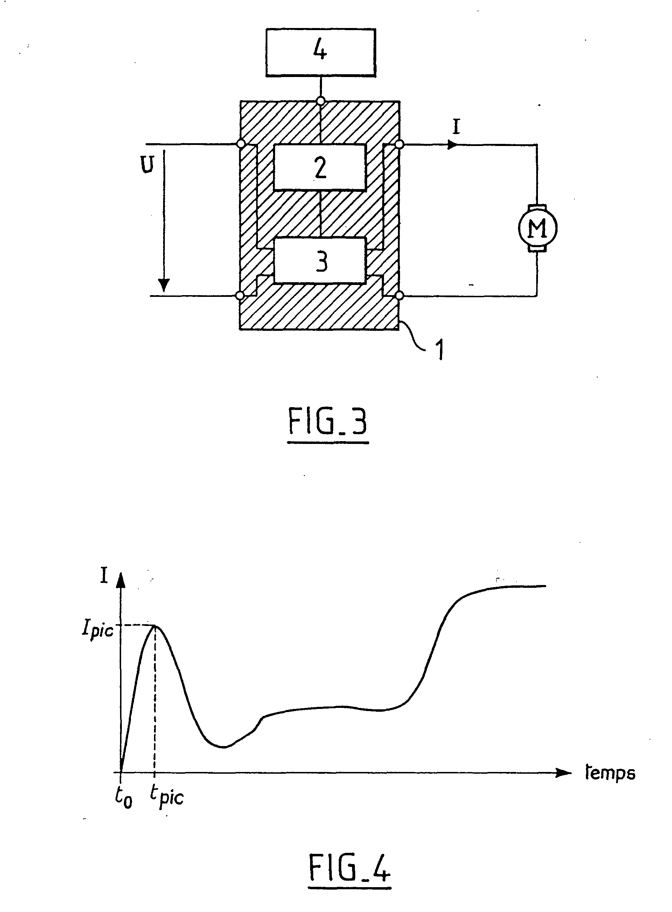

Comme représenté sur la figure 3, un dispositif 1 possible pour l'estimation de la position angulaire de l'arbre du moteur M comporte un micro-contrôleur 2 associé à une électronique 3 d'entrée/sortie qui permet de lire l'intensité I et la tension U d'alimentation du moteur M.

Le micro-contrôleur 2 est avantageusement le micro-contrôleur utilisé pour commander le moteur M et est à cet effet relié aux différentes commandes sur lesquelles l'utilisateur peut agir (bloc 4).

Dans cette hypothèse, l'électronique 3 comporte avantageusement un bloc inverseur de pilotage du moteur.

La lecture de U et de I est effectuée avec un échantillonnage dans le temps donné, par exemple avec un échantillonnage périodique.

Pour chaque échantillonnage, on calcule une estimation de la vitesse de rotation du moteur par l'équation :

$$\Omega_n = \frac{(U_n - RI_n)}{Ke}$$

et on calcule une estimation de la position angulaire $\theta_n$ du moteur par l'équation :

$$\theta_n - \theta_{n-1} = \left(\frac{\Omega_n + \Omega_{n-1}}{2}\right)(t_n - t_{n-1})$$

où $t_n$ désigne l'instant du nième échantillonnage.

A cet effet, le micro-contrôleur 2 comporte des moyens mémoire dans lesquels sont mémorisées les grandeurs R et Ke, supposées connues au moment du calcul.

On notera que cette méthode de calcul ne se veut qu'approximative, la grandeur LdI/dt étant négligée.

En outre, les grandeurs R et Ke peuvent varier dans le temps, notamment en fonction de la température externe du milieu dans lequel se trouve le moteur. Ceci est particulièrement vrai dans le cas de la résistance équivalente R.

Pour affiner la mesure, il est possible d'estimer la résistance R pendant la phase de démarrage du moteur.

Lors de la phase de démarrage du moteur, la courbe d'intensité de courant présente une forme du type de celle illustrée sur la figure 4.

Cette forme est caractérisée par un pic de démarrage (intensité de courant $I_{pic}$) qui intervient en un temps très court ($t_{pic} - t_0$) après la mise en route du moteur.

Ce courant $I_{pic}$ dépend en pratique de U et de R par la relation $I_{pic} = a\frac{U}{R}$ où a est un coefficient inférieur à 1, propre à chaque moteur.

La mesure de $I_{pic}$ à chaque démarrage permet au micro-contrôleur 2 d'estimer la valeur de la résistance.

$$R = a\frac{U}{I_{pic}}$$

Cette valeur de R est mémorisée et utilisée lors de l'estimation de la vitesse et de la position angulaire du moteur.

D'autres méthodes d'estimation de la résistance R sont possibles.

Notamment, dans le cas où l'on dispose de deux informations de positions fiables (appelées jalons dans la suite et obtenues par exemple au moyen de deux interrupteurs mécaniques basculés lorsque l'élément mobile prend deux positions données, de deux impulsions d'un capteur à incrémentation, etc.), une méthode de recalibration de la résistance R est la suivante.

On sait que

$$\Omega = \frac{U - RI}{Ke}$$

Si entre les deux jalons distants d'une valeur σ on intègre cette formule, on obtient

$$\sigma = \int_{1}^{2} \Omega dt = \int_{1}^{2} \frac{U - RI}{Ke}\, dt$$

d'où

$$R = \frac{1}{\int_{1}^{2} Idt}\left( \int_{1}^{2} Udt - K\sigma \right)$$

où t1 est l'instant où le jalon 1 est franchi, t2 l'instant où le jalon 2 est franchi, σ est l'angle qui sépare les positions correspondant aux deux jalons.

Si le système ne s'est pas arrêté entre les deux jalons et est en régime quasi statique, avec des évolutions lentes entre ceux-ci, on a alors, en accumulant les valeurs de I et U mesurées par échantillonnage :

$$R = \frac{1}{\sum_{tn=t1}^{t2} I_{n}.\Delta t}\left( \sum_{t=t1}^{t2} (U_{n}.\Delta t) - K\sigma \right)$$

où

In est la valeur échantillonnée du courant pour t=tn
Un est la valeur échantillonnée de la tension pour t=tn
et où Δt est la période d'échantillonnage.

On notera que R varie dans le temps, notamment en fonction de la température externe du milieu dans lequel se trouve le moteur.

Le calcul de R est avantageusement utilisé pour, par exemple en fonction d'abaques pré-calibrés, donner une information sur la température du moteur électrique.

Le micro-contrôleur 2 coupe l'alimentation dudit moteur lorsque la température ainsi déterminée est supérieure à une valeur seuil et pourrait engendrer une détérioration en utilisation.

On notera que les déterminations de vitesse et de position réalisées par le micro-contrôleur 2 sont avantageusement utilisées dans des systèmes de commande électrique d'ouvrants de véhicule automobile par exemple pour commander des protections contre des pincements trop importants (commande en sens inverse du moteur électrique lorsque sa vitesse tend à devenir nulle alors que l'ouvrant n'est pas en fin de course) ou encore pour asservir en vitesse l'ouvrant commandé ou encore pour commander son positionnement précis notamment en fin de course.

**Revendications**

1. Procédé pour le suivi de la rotation d'un moteur électrique à courant continu, **caractérisé en ce qu'**on mesure de façon échantillonnée dans le temps la tension et l'intensité du courant d'alimentation dudit moteur et en ce que, pour chaque instant $t_n$ d'échantillonnage, on calcule une estimation $\theta_n$ de la position angulaire en fonction d'une position déterminée ou connue pour un instant d'échantillonnage précédent et d'une estimation d'une valeur de vitesse angulaire entre ces deux instants, qui est fonction de la tension et de l'intensité de courant mesurée pour l'instant d'échantillonnage $t_n$ et/ou pour un ou plusieurs instants d'échantillonnage précédents.

**2.** Procédé selon la revendication 1, **caractérisé en ce qu'**on calcule une estimation d'une valeur de vitesse angulaire $\Omega_n$ à un instant $t_n$ à partir de l'équation :

$$\Omega_n = \frac{(U_n - RI_n)}{Ke}$$

où $U_n$ et $I_n$ sont les valeurs mesurées pour la tension et l'intensité d'alimentation à l'instant d'échantillonnage, où R correspond à la résistance équivalente du moteur, où $K_e$ est le paramètre de proportionnalité entre la vitesse de rotation de l'arbre du moteur et la force électromotrice générée par la rotation.

**3.** Procédé selon la revendication 2, **caractérisé en ce que** pour un instant $t_n$, on détermine une estimation $\theta_n$ de la position angulaire par :

$$\theta_n - \theta_{n-1} = \left(\frac{\Omega_n + \Omega_{n-1}}{2}\right)(t_n - t_{n-1})$$

où n-1 est l'indice de l'instant l'échantillonnage $t_{n-1}$ juste avant l'instant $t_n$.

**4.** Procédé selon l'une des revendications 2 ou 3, **caractérisé en ce que** lors d'un démarrage, on détermine une estimation de la valeur de la résistance R en calculant :

$$R = a x \frac{U}{I_{pic}}.$$

où $I_{pic}$ est l'intensité de courant maximale mesurée lors d'un démarrage, U la tension d'alimentation mesurée correspondant à cette intensité de courant, a un coefficient donné.

**5.** Procédé selon l'une des revendications 2 ou 3, **caractérisé en ce qu'**on détermine une estimation de la valeur de la résistance R en calculant :

$$R = \frac{1}{\int_1^2 I dt} \left( \int_1^2 U dt - K\sigma \right)$$

où $\sigma$ est l'angle qui sépare les positions correspondant à deux jalons de positions déterminées, t1 et t2 correspondant aux deux instants où ces deux jalons sont franchis.

**6.** Procédé selon la revendication 5, **caractérisé en ce que** pour déterminer cette valeur estimée, on calcule :

$$R = \frac{1}{\sum_{in=t1}^{t2} I_n . \Delta t} \left( \sum_{t=t1}^{t2} (U_n . \Delta t - K\sigma) \right)$$

où

In est la valeur échantillonnée du courant pour t=tn
Un est la valeur échantillonnée de la tension pour t=tn
et où $\Delta t$ est la période d'échantillonnage.

7. Procédé selon l'une des revendications 4 à 6, **caractérisé en ce qu'**on détermine une estimation de la température du moteur électrique en fonction de l'estimation de la valeur de la résistance R et en ce que, selon la valeur de la température ainsi estimée, on coupe l'alimentation du moteur électrique.

8. Dispositif pour le suivi de la rotation d'un moteur électrique à courant continu, **caractérisé en ce qu'**il comporte des moyens pour mesurer de façon échantillonnée dans le temps la tension et l'intensité du courant d'alimentation dudit moteur, ainsi que des moyens de calcul qui mettent en oeuvre le procédé selon l'une des revendications précédentes.

9. Dispositif selon l'une des revendications 3 ou 4, **caractérisé en ce que** les moyens de calcul comportent un micro-contrôleur qui pilote le moteur électrique.

10. Système de commande d'ouvrants de véhicule automobile comportant un moteur électrique à courant continu, **caractérisé en ce qu'**il comporte un dispositif selon l'une des revendications 8 ou 9.

11. Système selon la revendication 10, **caractérisé en ce qu'**il comporte des moyens pour, en fonction de la vitesse et de la position angulaire calculées à chaque instant d'échantillonnage, commander le moteur électrique de façon à éviter des pincements trop importants.

12. Système selon la revendication 10, **caractérisé en ce qu'**il comporte des moyens pour, en fonction de la vitesse et de la position angulaire calculées à chaque instant d'échantillonnage, asservir en vitesse le déplacement de l'ouvrant.

13. Système selon la revendication 10, **caractérisé en ce qu'**il comporte des moyens pour, en fonction de la vitesse et de la position angulaire calculées à chaque instant d'échantillonnage, commander le moteur électrique de façon à obtenir un positionnement précis de l'ouvrant.

FIG_1

FIG_2

FIG.3

FIG.4

**Office européen des brevets**

## RAPPORT DE RECHERCHE EUROPEENNE

Numéro de la demande

EP 01 40 0667

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | BIRK M: "UNKONVENTIONELLE DREHZAHLMESSUNG UND -REGELUNG BEI GLEICHSTROMMOTOREN. SWITCHED-CAPACITOR-FILTER BESTIMMT DREHZAHL AUSDER WELLIGKEIT" ELEKTRONIK,DE,FRANZIS VERLAG GMBH. MUNCHEN, vol. 33, no. 25, 1 décembre 1984 (1984-12-01), pages 71-72, XP002029304 ISSN: 0013-5658 * le document en entier * --- | 1,2 | H02P7/285 |
| A | WO 91 02401 A (ELECTROLUX AB) 21 février 1991 (1991-02-21) * abrégé * --- | 1 | |
| A | FR 2 769 428 A (MICRO BEAM) 9 avril 1999 (1999-04-09) * abrégé * ----- | 1 | |
| | | | **DOMAINES TECHNIQUES RECHERCHES (Int.Cl.7)** |
| | | | H02P |

Le présent rapport a été établi pour toutes les revendications

| Lieu de la recherche | Date d'achèvement de la recherche | Examinateur |
|---|---|---|
| LA HAYE | 10 juillet 2001 | Wansing, A |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 0667

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2001

| Document brevet cité au rapport de recherche | Date de publication | Membre(s) de la famille de brevet(s) | Date de publication |
|---|---|---|---|
| WO 9102401 A | 21-02-1991 | SE 464213 B | 18-03-1991 |
| | | AT 90487 T | 15-06-1993 |
| | | AU 6064090 A | 11-03-1991 |
| | | CA 2037042 A,C | 29-01-1991 |
| | | DE 69001891 D | 15-07-1993 |
| | | DE 69001891 T | 20-01-1994 |
| | | DK 437575 T | 08-11-1993 |
| | | EP 0437575 A | 24-07-1991 |
| | | ES 2042305 T | 01-12-1993 |
| | | JP 4500899 T | 13-02-1992 |
| | | SE 8902619 A | 29-01-1991 |
| | | US 5173650 A | 22-12-1992 |
| FR 2769428 A | 09-04-1999 | AU 9249798 A | 27-04-1999 |
| | | WO 9918654 A | 15-04-1999 |
| | | EP 1020019 A | 19-07-2000 |

EPO FORM P0460

Pour tout renseignement concernant cette annexe : voir Journal Officiel de l'Office européen des brevets, No.12/82